# EUROPEAN PATENT APPLICATION

(11) **EP 1 340 693 A1**
(43) Date of publication of application: **03.09.2003**
(21) Application number: 02251315.4
(22) Date of filing: 26.02.2002
(51) Int. Cl.: B65D 77/20, B26F 1/18, B29C 51/14

(54) **Easy open package**

(71) Applicant: Cryovac, Inc., Duncan, S.C. 29334-0464 (US)
(72) Inventor: Gissi, Giuseppe, Rho (MI) (IT); Zappa, Gianni, Rho (MI) (IT); Fusarpoli, Flavio, 20017 Rho (MI) (IT)
(74) Representative: De Carli, Elda

(57) **Abstract**

An easy open package comprises a tray (3) having a rim (5) to which a lidding film can be sealed. A line of weakness (15) is formed at the underside of a corner of the tray to allow the foam material (19) of the tray to be broken to form a tab which facilitates peeling of the lidding film (21) from the remainder of the tray perimeter. The tray 3 includes a liner film 17 bonded thereto and severed at the line of weakness 15.

## Description

The present invention relates to a package which can be easily opened by the consumer.

Easily opened packages, often known as "easy open" packages, have been available for some time in the food packaging field and frequently enable a consumer to initiate separation of two films which are sealed or adhered together, as a means of enabling access to a product stored between those films. For example, it is known to provide packs including a thermo-formed tray having a base and an upstanding side wall terminated at a rim which extends round the entire pack and facilitates the closing of the pack by sealing a gas-tight film to the rim in a flat configuration so as to enclose a modified atmosphere or an inert gas. The product can be viewed through this cover film or "lid", and often the tray has at one corner an enlarged portion to the rim and there is a deliberate configuration of having the seal area inboard of that corner so that, whilst a continuous seal is provided between the cover film or lid and the rim of the tray, there is at that particular corner an unsealed region which can be grasped by the consumer and pulled in order to initiate separation of the lid film from the tray rim.

It is an object of the present invention to provide for an easy open pack in which the support for the product is formed of a barrier foam. The term "barrier" signifies that there is a gas-impermeable property to the barrier foam support, usually imparted by including a resin such as Polyamide, Polyvinylidene Chloride or Ethylene Vinyl Alcohol in the foam support. It is desirable for the transmission of gas through such a barrier foam support to be less than 0.5cc/kPa/cm²/day at 23°C and 50% Relative Humidity.

Accordingly one aspect of the present invention provides a package comprising a foam support having a film liner attached thereto, and a lidding film peelable from the liner film, characterised by a predetermined line of weakness formed in the foam support to facilitate breaking away of a marginal portion of the foam support to which the liner film and lidding film are attached.

A second aspect of the present invention provides a foam support for packaging comprising a foam layer having attached to one side thereof a liner film, and including means for defining a location for a sealing to a lidding film, characterized by a predetermined line of weakness extending inboard of the perimeter of said support, at which said line of weakness the liner film is cut and the foam is weakened, and in that said predetermined line of weakness lies outside the extent of said seal/defining means.

A third aspect of the present invention provides apparatus for forming a foam support for a package, comprising means for attaching a liner to a foam support sheet, means for cutting said liner and for defining a line of predetermined weakness in said foam support sheet at a location which will become a marginal region of a finished foam support, and means for shaping the pre-cut liner and foam sheet as a support for a package.

In order that the present invention may more readily be understood, the following description is given, merely by way of example, with reference to the accompanying drawing in which:
Figure 1 is a top plan view of a package in accordance with the present invention;
Figure 2 is a section taken on the line 2-2 of Figure 1;
Figure 3 is a detail of the right-hand corner illustrated in the sectional view of Figure 2;
Figure 4 shows a plan view of the detail of Figure 3;
Figure 5 shows a side elevation of an alternative embodiment; and
Figure 6 shows a serrated cutter blade suitable for forming a partial cut in the foam support.

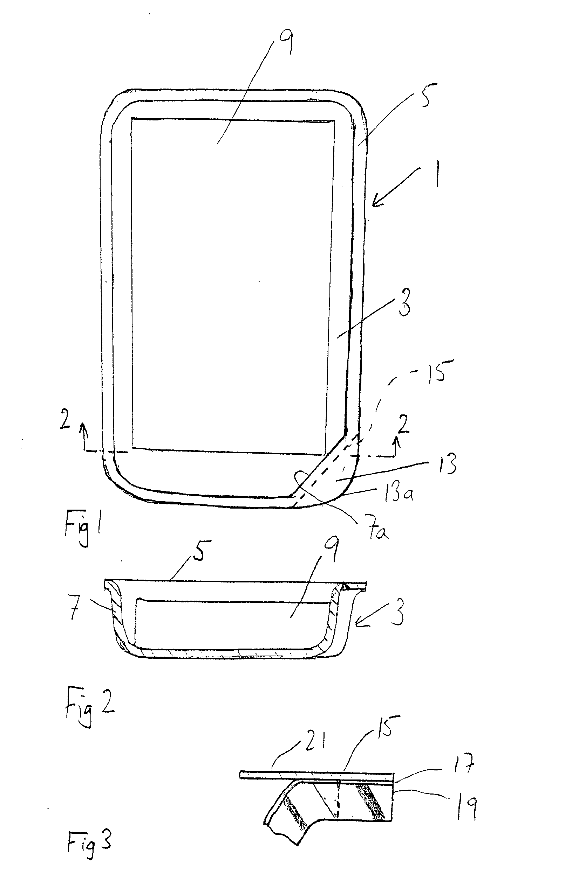

Referring now to the drawings, Figure 1 shows a package 1 comprising a tray 3 having a continuous perimeter rim 5 extending around the upper part of a side wall 7 which is more easily visible in Figure 2. Figures 1 and 2 show schematically a product 9 within the tray and covered by a lidding film 11 of gas barrier properties.

At the bottom right hand comer of the tray, as viewed in the plan view of Figure 1, the perimeter of the tray rim is the same as that of the other three corners, but the side wall is at a location displaced inwardly as compared with the corresponding arcuate complex curved side wall of the other three corners so as to present an enlarged region 13 of the rim bounded between the arcuate perimeter 13a and the diagonally extending side wall portion 7a.

Close to the top of this diagonally extending side wall portion 7a there is formed in the material of the tray a partial cut or perforations defining a line of weakness 15 to the enlarged rim portion 13, allowing that rim portion to be bent upwardly and snapped away from the remainder of the tray. The cut is preferably formed by stamping the foam 19 with a serrated blade, but may instead be formed in any other convenient manner.

It should at this point be understood that the material of the tray comprises an expanded plastic material, for example polystyrene with a fine pore structure, which has the lightweight properties and pleasant feel of foam, optionally having bonded to its upper surface a layer of high impact polystyrene (HIPS) to impart rigidity to the support. In order to impart the required degree of gas barrier property to the tray the material of the tray first of all has applied thereto a gas barrier liner film on its upper surface. This liner film is illustrated at 17 in Figure 3, and can be seen to follow the contours of the tray material 19, whereas the lidding barrier film 21 shown in Figure 3 adopts a substantially planar configuration spanning the open space bounded by the rim 5 of the support tray. By "barrier" when referring to the liner, we intend that the oxygen transmission rate should be less than 100cc/cm2/kPa/day at 23 ° C at 0% Relative Humidity, preferably less than 4cc/cm²/kPa/day at 50% Relative Humidity.

The material used for the barrier liner film 17 may comprise a multi-layer laminate comprising:- peelable sealant (LLDPE)/tie layer (ethylene vinyl acetate)/barrier (ethylene vinyl alcohol)/tie layer/skin layer (Styrene Butadiene Styrene). The peelability of the sealant layer, achieved for example by incorporating a minor proportion of polybutylene, enables the subsequently applied lidding layer to be removed therefrom with a peel force which is less than the peel force of the skin layer from the high impact polystyrene surface of the foam component.

The lidding layer is also a multi-layer laminate, for example comprising:-
skin layer/tie/abuse layer/barrier layer/abuse layer/tie/skin layer. The skin layers may for example be of linear low density polyethylene, the abuse layers may be of polyamide, and the barrier layer may be ethylene vinyl alcohol.

If desired, the skin layer on one side of the lidding film 21 may be rendered peelable instead of the sealant layer on the upper side of the liner film 17.

The manufacture of the tray 3 comprises the initial step of forming a sheet of the expanded plastic material defining the body of the tray material 19, optionally having a layer of HIPS extrusion coated thereon, and then applying liner film 17 to it in intimate contact therewith and sealed thereto the to impart the gas barrier properties.

Next the assembly of the gas barrier liner 17 and the foam material 19 is thermoformed to provide the shape of the tray, for example by vacuum draping into a concave mold having the required shape of the underside of the tray, and the tray is then ready for the steps of filling and closing the package. At this stage the cut or scoring 15 is formed in the side of the foam remote from that to which the liner film 17 is adhered.

In practice the trays may be produced at a location remote from that where the package is to be closed, or there may be a continuous line which provides for stamping of the trays and moulding them from a continuous supply of the foam material 19 with the liner material 17 sealed thereto, and then filling and sealing of the packs in line.

The pack filling station comprises a first region where the product article 9 is placed in the upright tray such that the top surface of the product article 9 lies below the plane of the rim 5 of the tray 3, and then in a second region the lidding film 21 is introduced into position just above and parallel to the plane of the rim 5 of the tray 3 and is then sealed to the liner film 17 so as to close the pack. During this closing process the pack may be evacuated in order to remove substantially all or a part of the residual oxygen from within the pack, and/or gas flushed with an inert gas. The atmosphere within the pack may either be left as the inert gas such as nitrogen or it may be replaced by a modified atmosphere having specifically chosen ratios of oxygen, nitrogen, carbon dioxide.

In order to achieve the desired easy open action, the lidding film 21 is required to attach to the liner film 17 in such a way that the bond therebetween can be broken by peeling of the lidding film 21 away from the liner 17, as described above. The separation force required to achieve this must be less than the delamination force which would cause the liner 17 to detach from the foam material 19. The lidding film 21 may, if desired, be heat shrinkable.

The existence of the predetermined line 15 of weakness in the tray rim allows the majority of the enlarged rim portion 13 of Figure 1 to be bent upwardly or downwardly so that it breaks away from the remainder of the tray along the line 15, and this then provides the tab which can be pulled upwardly in order to separate the lidding film 21 (with the attached tab 13 and the covering minor portion of the liner film 17 thereon) to be peeled away from the remainder of the liner film 17 without destroying the integrity of the tray. The liner film 17 will preferably have been severed along the line 15 to facilitate this action.

Under certain circumstances it might be possible for the lidding film 21 later to be reattached to the liner 17 for subsequent reclosing of the pack, but the degree of gastightness will not be the same as it is in the pack as originally sealed.

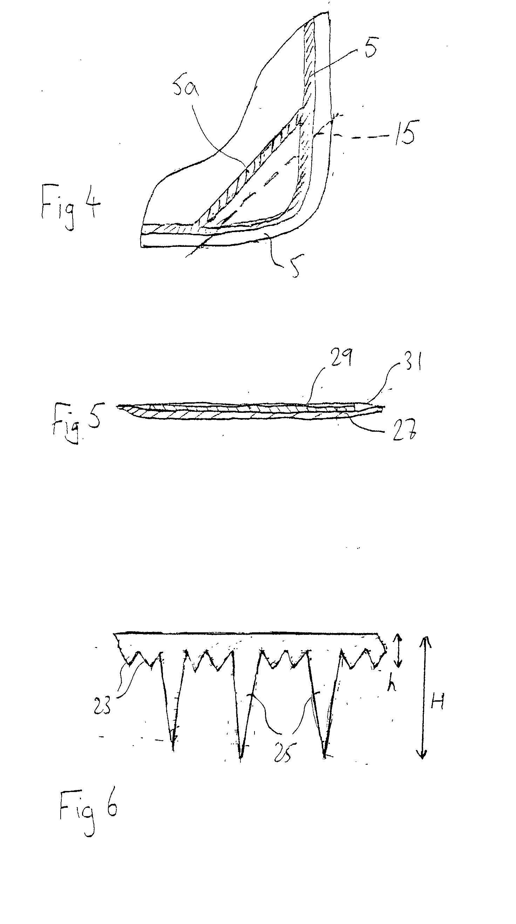

Figure 4 shows that the seal 5 may extend in a continuous manner around the rim of the film while separately there is a seal portion 5a extending diagonally between the wall portion 7a and the line of weakness 15. This continuity of the seal 5 around the detachable corner portion of the foam support is in order to ensure that where the lidding film 21 is shrinkable it does not shrink back from the corner of the pack but remains attached thereto in order to initiate the peeling action when the tab is broken off. Alternatively there may be a tack seal at the corner instead of the continuous line seal around the corner, in order to ensure that the lidding film remains attached to the foam support.

Figure 5 shows a side elevation of an alternative form of the pack in which the support 27 is substantially planar. It may have little or no thermo-forming so that in this case it comprises a foam sheet rather than a tray having a distinct side wall. Such a pack is useful for packaging single slices 29 of, for example, meat or cheese covered by a lidding film 31.

Figure 6 shows a view of the serrated cutter blade to form the line of weakness 15, employing a first set of shallow teeth 23 of height h which serve to penetrate the liner 17 and the optional layer of HIPS adjacent thereto, and a second set of longer teeth 25 of height H which are more widely spaced apart and serve to perforate the foam layer 19 to facilitate the snapping action for opening of the pack.

The function of the liner 17 need not be to impart barrier properties, but instead it may be chosen to be a material chosen for food contact considerations, i.e. to be more readily compatible with the product article 9 than is the polystyrene of the foam material.

The material of the support will usually be polystyrene foam but may be any other foam material. The important consideration is that the support should be relatively rigid in order to ensure that snapping does occur at the line of weakness 15.

Other shapes of barrier foam support are possible, for example the support may be circular in plan view with a projecting tab to provide for the snapping action to initiate peeling. Such a pack is particularly useful for packing pizzas.

## Claims

1. A package comprising a foam support having a film liner attached thereto, and a lidding film peelable from the liner film, **characterised by** a predetermined line of weakness formed in the foam support to facilitate breaking away of a marginal portion of the foam support to which the liner film and lidding film are attached.

2. A pack according to claim 1 having a substantially rectangular planform wherein said line of weakness extending diagonally across a corner of the foam support.

3. A pack according to claim 2 , wherein the lidding film is heat shrinkable and is sealed to the liner along a line inboard of the line of weakness and also outboard of said line of weakness.

4. A pack according to any one of the preceding claims, wherein at least one of the liner film and the lidding film is treated to impart peelability from the other .

5. A pack according to any one of the preceding claims, wherein the foam support is in the form of a thermoformed tray having a base and an upstanding side wall defining a rim to which the lidding film is attached when the pack is sealed, said liner film being applied to the side of the foam support which is the concave side of the tray.

6. A pack according to any one of the preceding claims wherein the notch or scoring has been formed by cutting of the liner film and the perforation of the foam material after application of the liner film thereto.

7. A foam support for packaging comprising a foam layer having attached to one side thereof a liner film, and including means for defining a location for sealing to a lidding film, **characterized by** a predetermined line of weakness extending inboard of the perimeter of said support, at which line of weakness the liner film is cut and the foam is weakened, and in that said predetermined line of weakness lies outside the extent of said seal-defining means.

8. A support according to claim 7, wherein said means defining a location for sealing a holding film consists of a raised rim portion of said support.

9. Apparatus for forming a foam support for a package, comprising means for attaching a liner to a foam support sheet, means for cutting said liner and for defining a line of predetermined weakness in said foam support sheet at a location which will become a marginal region of a finished foam support, and means for shaping the pre-cut liner and foam sheet as a support for a package.

10. Apparatus according to claim 9 wherein said means for shaping the pre-cut liner and the foam sheet to form said finished foam support comprises means for cutting out a shape from the liner and foamed sheet assembly and/or means for thermo-forming said assembly.

11. Apparatus according to either of claims 9 and 10 wherein said means for cutting the liner and defining a line of predetermined weakness in the foam sheet comprises a blade having first cutting means for severing the liner and second cutting means for defining said line of predetermined weakness in the foam support sheet.

12. Apparatus according to claim 11, wherein said first cutting means comprises first teeth having a height such that they are able to cut said liner in register with said line of predetermined weakness, and said second cutting means comprises longer second teeth having a length sufficient to penetrate said foam sheet to define perforations therein.
